# EUROPÄISCHE PATENTSCHRIFT

(11) **EP 2 331 478 B1**
(45) Veröffentlichungstag und Bekanntmachung des Hinweises auf die Patenterteilung: **13.12.2017**
(21) Anmeldenummer: 09782192.0
(22) Anmeldetag: 26.08.2009
(51) Int. Cl.: C04B 24/26, C04B 40/00

(54) **VERWENDUNG WASSERREDUZIERTER HYDRAULISCH ABBINDENDER ZUSAMMENSETZUNGEN MIT ZEITLICH VERLÄNGERTER FLIESSFÄHIGKEIT**
USE OF WATER-REDUCED HYDRAULICALLY SETTING COMPOSITIONS WITH EXTENDED FLOW CAPABILITY
UTILISATION DE COMPOSITIONS À PRISE HYDRAULIQUE À TENEUR RÉDUITE EN EAU, AYANT UNE FLUIDITÉ PROLONGÉE DANS LE TEMPS

(30) Priorität: 26.08.2008 EP 08162982
(43) Veröffentlichungstag der Anmeldung: 15.06.2011
(73) Patentinhaber: Sika Technology AG, 6340 Baar (CH)
(72) Erfinder: FRUNZ, Lukas, CH-8305 Dietlikon (CH); SULSER, Ueli, CH-8103 Unterengstringen (CH); ZIMMERMANN, Jörg, CH-8400 Winterthur (CH); GRESSER, Jürgen, 68220 Buschwiller (FR)
(86) Internationale Anmeldenummer: PCT/EP2009/060968
(87) Internationale Veröffentlichungsnummer: WO 2010/026085

(56) Entgegenhaltungen:
- EP-A- 1 136 508
- EP-A- 1 138 697
- EP-A- 1 795 511
- EP-B- 0 734 359
- FR-A- 2 851 937
- GB-A- 2 319 522
- US-A1- 2005 119 375
- US-A1- 2006 266 977

## Beschreibung

### Technisches Gebiet

Die vorliegende Erfindung betrifft das Gebiet der Zusatzmittel für hydraulisch abbindende Systeme, insbesondere der Dispergiermittel für Betonzusammensetzungen.

### Stand der Technik

Polymere aus α-β-ungesättigten Carbonsäuren mit Polyalkylenglykol-Seitenketten, sogenannte Polycarboxylate, werden bereits seit längerem in der Betontechnologie als Dispergiermittel, insbesondere als Hochleistungsverflüssiger, wegen ihrer starken Wasserreduktion eingesetzt. Diese Polymere haben eine Kammpolymerstruktur. Diese Polymere verbessern bei gleichem Wasser/Zement (w/z) - Wert die Verarbeitbarkeit des Betons oder vermindern bei gleicher Verarbeitbarkeit den Wasseranspruch und damit den w/z-Wert, was zu einer Erhöhung der Druckfestigkeit und der Dichtigkeit führt.

Die herkömmlichen Polycarboxylate vermindern bei gleicher Verarbeitbarkeit den Wasseranspruch und damit den w/z-Wert um etwa 20 bis 30 %, verglichen mit Betonzusammensetzungen ohne diese Polymere. Verflüssiger mit einer solch starken Wasserreduktion werden als Hochleistungsverflüssiger bezeichnet. Für gewisse Anwendungen, beispielsweise für Transportbeton der Festigkeitsklasse C20 mit beispielsweise einem Zementanteil von 265 kg pro Kubikmeter Beton und Wasserreduktionsrate 10% oder Transportbeton der Festigkeitsklasse C30 mit einem Zementanteil von 295 kg pro Kubikmeter Beton und Wasserreduktionsrate 12-15%, ist eine geringere Wasserreduktionsrate von höchstens 15 % erwünscht. Dies kann mit herkömmlichen Polycarboxylaten nur erreicht werden, wenn sie in geringer Dosierung eingesetzt werden, was zu einem schnellen Abfall des Ausbreitmasses und somit zu einer verminderten Verarbeitbarkeit führt. Gerade bei Transportbeton ist aber eine verlängerte Verarbeitbarkeit erwünscht, da der Beton über einen bestimmten Zeitpunkt transportiert werden muss, beispielsweise von der Produktion zur Verarbeitungsstätte. Entsprechend ist es Stand der Technik, dass für Anwendungen mit geringer Wasserreduktionsrate keine Hochleistungsverflüssiger, sondern Verflüssiger der ersten Generation, beispielsweise Melamin-Sulfonsäure-Formaldehyd Kondensate eingesetzt werden. Diese Verflüssiger sind jedoch wegen der Freisetzung des toxischen Formaldehyds ökologisch problematisch und daher nicht erwünscht. Andere bekannte Verflüssiger mit geringer Wasserreduktionsrate basieren auf Lignin- oder Naphthalinsulfonaten, wie beispielsweise in WO02081400A1 beschrieben. Solche Verflüssiger weisen den Nachteil auf, dass sich die damit hergestellten Zusammensetzungen verfärben. Zudem müssen diese bekannten Verflüssiger in relativ hohen Dosierungen eingesetzt werden um die gewünschte Wasserreduktionsrate zu erreichen und gewährleisten dennoch eine deutlich verminderte Verarbeitbarkeit. Zudem weisen solche Verflüssiger der ersten Generation trotz höherer Dosierung eine zum Teil ungenügende Verarbeitbarkeit auf.

Es hat sich nun gezeigt, dass die bekannten Betonverflüssiger nur bedingt für hydraulisch abbindende Zusammensetzungen mit geringer Wasserreduktionsrate bei gleichbleibender Verarbeitbarkeit eingesetzt werden können. Die bekannten Betonverflüssiger müssen entweder in so kleinen Dosierungen eingesetzt werden, dass sich die Verarbeitbarkeit verschlechtert oder sie müssen in hohen Dosierungen eingesetzt werden um die gewünschte Wasserreduktionsrate zu erreichen, so dass die Zusammensetzung kaum noch abbindet.

In diesem Zusammenhang beschreibt die EP 1 795 511 A1 (Sika Technology AG) z.B. eine Zusammensetzung aus einem Polycarboxylatverflüssiger und einem Polyalkylenglykol, welche insbesondere eine Verlängerung der Verarbeitungszeit von hydraulisch abbindenden Zusammensetzungen ermöglicht. Die konkret eingesetzten Polycarboxylatverflüssiger weisen dabei ein Verhältnis von Säuremonomeren zu übrigen Monomeren von wenigstens 1.76 auf.

### Darstellung der Erfindung

Aufgabe der vorliegenden Erfindung ist es daher, Dispergiermittel zur Verfügung zu stellen, bei denen die Nachteile des Standes der Technik überwunden werden, und welche geeignet sind, eine ausreichende Verflüssigungswirkung, das heisst eine gewünschte Wasserreduktionsrate von 5 bis 15 % zu erreichen und eine verlängerte Verarbeitbarkeit von hydraulisch abbindenden Zusammensetzungen zu erzielen.

Überraschenderweise wurde gefunden, dass dies durch die Verwendung eines Polymer **P** gemäss Anspruch 1 erreicht werden kann. Es konnte festgestellt werden, dass mit solchen Polymeren die gewünschte Wasserreduktionsrate von 5 bis 15 % bei verlängerter Verarbeitbarkeit erreicht werden kann. Weiterhin hat sich gezeigt, dass diese Polymere zur Wasserreduktion von hydraulisch abbindenden Zusammensetzungen eingesetzt werden können und dass sie das Abbinden weder zu stark verzögern noch zu stark beschleunigen. Ebenfalls sind mit diesen Polymeren Zusammensetzungen möglich, die sich nicht verfärben.

Die Erfindung umfasst zudem ein Verfahren zur zeitlichen Verlängerung der Fliessfähigkeit von wasserreduzierten wässrigen hydraulisch abbindenden Zusammensetzungen. Weitere vorteilhafte Ausgestaltungen der Erfindung ergeben sich aus den Unteransprüchen.

### Wege zur Ausführung der Erfindung

Die vorliegende Erfindung betrifft die Verwendung eines Polymers **P** zur zeitlichen Verlängerung der Fliessfähigkeit von wasserreduzierten wässrigen hydraulisch abbindenden Zusammensetzungen, wobei sich eine zeitliche Verlängerung der Fliessfähigkeit dadurch äussert, dass **Z1** sowie **Z2:**
i.) ein Ausbreitmass nach EN 1015-3, respektive EN 12350-5, unmittelbar nach Einmischung des Wassers von 220 - 180 mm, respektive 450 - 550 mm, aufweisen, und
ii.) einen Unterschied des Ausbreitmasses nach EN 1015-3, respektive EN 12350-5, unmittelbar nach Einmischung des Wassers im Vergleich zum Ausbreitmass nach 90 Minuten von maximal 15 %, respektive maximal 20 %, aufweisen.

Bei **Z1** handelt es sich um eine wässrige hydraulisch abbindende Zusammensetzungen umfassend Wasser und hydraulisches Bindemittel, welche eine identische Zusammensetzung aufweist wie eine wässrige hydraulisch abbindende Referenzzusammensetzungen **Z2,** mit dem Unterschied, dass **Z1** zusätzlich Polymer **P** und 5 - 15 % weniger Wasser als **Z2** enthält.

Unter dem Begriff "Verlängerung der Fliessfähigkeit" versteht man, dass die hydraulisch abbindende Zusammensetzung nach Einmischung von einer definierten Menge Wasser und einer bestimmten Menge an Zusatzmittel umfassend das Polymer **P** noch über eine längere Zeit verarbeitbar bleibt als Zusammensetzungen, welche kein Polymer **P** umfassen.

Die Fliessfähigkeit von wässrigen hydraulisch abbindenden Zusammensetzungen bestimmt der Fachmann über das Ausbreitmass und er kennt die beiden Normen EN 1015-3, respektive EN 12350-5. Für die Bestimmung des Ausbreitmasses von hydraulisch abbindenden Zusammensetzungen, welche Zuschlagstoffe grösser als 8 mm aufweisen, wird im vorliegenden Dokument die Norm EN 12350-5 verwendet.

Ein Ausbreitmass nach EN 1015-3, respektive EN 12350-5, unmittelbar nach Einmischung des Wassers von 220 - 180 mm, respektive 450 - 550 mm, ist dahingehend von Vorteil, dass bei Werten über 220 mm einer wässrigen hydraulisch abbindenden Zusammensetzung das Anfangsausbreitmass zu hoch ist und die Zusammensetzung separieren kann und somit nicht mehr brauchbar ist.

Einen Unterschied des Ausbreitmasses nach EN 1015-3, respektive EN 12350-5, unmittelbar nach Einmischung des Wassers im Vergleich zum Ausbreitmass nach 90 Minuten von maximal 15 %, respektive maximal 20 %, weist den Vorteil einer vorteilhaften Fliessfähigkeit über den gesamten Zeitraum von 90 Minuten nach Einmischung des Wassers auf.

Die Verarbeitbarkeit, respektive das Ausbreitmass, von **Z1** wird somit durch die Verwendung von Polymer **P** sowohl zu Beginn, d. h. unmittelbar nach Einmischung des Anmachwassers zum hydraulischen Bindemittel, wie auch nach 90 min nach Einmischung des Anmachwassers ähnlich dem der Referenzzusammensetzung **Z2.**

Handelt es sich bei der Referenzzusammensetzung **Z2** um eine hydraulisch abbindende Zusammensetzung, welche unmittelbar nach Einmischung des Anmachwassers zum hydraulischen Bindemittel eine vorteilhaftes Ausbreitmass aufweist und deren Ausbreitmass nach 90 Minuten, mehr oder weniger aufrecht erhalten bleibt oder nur wenig abnimmt, je nach Zusammensetzung maximal 15 %, respektive maximal 20 %, so führt eine erfindungsgemässe Verwendung des Polymer **P** zu vergleichbaren Eigenschaften von **Z1,** mit dem Vorteil, dass **Z1** gegenüber **Z2** 5 - 15 % weniger Wasser enthält. Dies führt bei **Z1,** gegenüber **Z2,** zu einer Erhöhung der Druckfestigkeit und der Dichtigkeit im abgebundenen Zustand.

Die Verarbeitbarkeit, respektive das Ausbreitmass, von **Z1** wird somit durch die Verwendung von Polymer **P** sowohl zu Beginn, d. h. unmittelbar nach Einmischung des Anmachwassers zum hydraulischen Bindemittel, wie auch nach 90 min ähnlich dem der Referenzzusammensetzung **Z2.**

Handelt es sich bei der Referenzzusammensetzung **Z2** um eine hydraulisch abbindende Zusammensetzung, welche unmittelbar nach Einmischung des Anmachwassers zum hydraulischen Bindemittel ein vorteilhaftes Ausbreitmass aufweist und deren Ausbreitmass nach 90 Minuten, mehr oder weniger aufrecht erhalten bleibt oder nur wenig abnimmt, je nach Zusammensetzung vorzugsweise weniger als 15 bis 20%, so führt eine erfindungsgemässe Verwendung des Polymer **P** zu vergleichbaren Eigenschaften von **Z1,** mit dem Vorteil, dass **Z1** gegenüber **Z2** 5 - 15 % weniger Wasser enthält. Dies führt bei **Z1,** gegenüber **Z2,** zu einer Erhöhung der Druckfestigkeit und der Dichtigkeit im abgebundenen Zustand. Zudem sind mit der Verwendung des Polymers **P** Zusammensetzungen möglich, die sich nicht verfärben.

Dies ist ein grosser Vorteil gegenüber der Verwendung von herkömmlichen Verflüssigern. Bei der Verwendung von herkömmlichen Hochleistungsverflüssigern müsste man so geringe Dosierungen einsetzen, um nicht zu einem so hohen Ausbreitmass unmittelbar nach Einmischung des Anmachwassers zu gelangen, dass die Zusammensetzung separieren würde, da das Ausbreitmass nach 90 Minuten zu gering wäre. Bei der Verwendung der herkömmlichen Verflüssigern der ersten Generation, beispielsweise den Lignosulfonaten, müssten gegenüber dem Polymer **P** beträchtlich höhere Dosierungen eingesetzt werden, was sowohl ökologisch wie auch ökonomisch einen grossen Nachteil darstellt.

Unter den Begriff "hydraulisch abbindende Zusammensetzung" können grundsätzlich alle dem Beton-Fachmann bekannten hydraulisch abbindenden Substanzen verstanden werden. Insbesondere handelt es sich hier um hydraulische Bindemittel wie Zemente, wie beispielsweise Portlandzemente oder Tonerdeschmelzzemente und respektive deren Mischungen mit Flugaschen, Silica fume, Schlacke, Hüttensande und Kalksteinfiller. Weitere hydraulisch abbindende Substanzen im Sinne der vorliegenden Erfindung sind Gips, in Form von Anhydrit oder Halbhydrat, oder gebrannter Kalk. Als hydraulisch abbindende Zusammensetzung wird Zement bevorzugt. Weiterhin sind Zuschlagstoffe wie Sand, Kies, Steine, Quarzmehl, Kreiden sowie als Additive übliche Bestandteile wie andere Betonverfüssiger, beispielsweise Lignosulfonate, sulfonierte Naphthalin-Formaldehyd Kondensate, sulfonierte Melamin-Formaldehyd-Kondensate oder Polycarboxylatether, Beschleuniger, Korrosionsinhibitoren, Verzögerer, Schwindreduzierer, Entschäumer oder Porenbildner möglich.

Vorzugsweise ist das hydraulische Bindemittel ausgewählt ist aus der Gruppe bestehend aus Zement; Mischungen aus Zement mit Flugaschen, Silica fume, Schlacke, Hüttensande oder Kalksteinfiller; Gips; und gebrannter Kalk. Insbesondere bevorzugt ist Zement.

Das Polymer **P** besteht aus:
a) *m* Mol-% mindestens einer Säureeinheit **A** der Formel (I); und 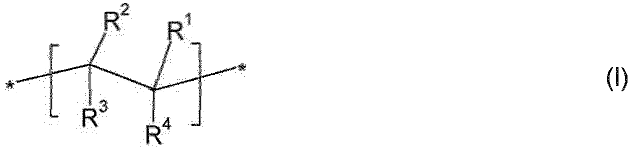
b) *n* Mol-% mindestens einer Struktureinheit **B** der Formel (II);

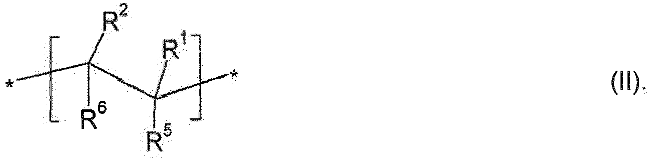

Dabei ist R¹ H oder CH₃ und R², R³, R⁶ stehen für H und R⁴ für COOM.

M bedeutet H, Alkalimetall, Erdalkalimetall oder andere zwei- oder dreiwertige Metallatome, Ammonium, Alkyl-Ammonium, oder eine Mischung davon. M kann insbesondere H, Na, Ca/2, Mg/2, NH₄ oder ein organisches Ammonium darstellen. Es ist dem Fachmann klar, dass bei den mehrwertigen Ionen ein weiteres Gegenion vorhanden sein muss, das unter anderem auch ein Carboxylat desselben oder eines anderen Moleküls des Polymers **P** sein kann. Die Ammoniumverbindungen sind insbesondere Tetraalkylammonium oder aber HR₃N, wobei R eine Alkylgruppe insbesondere eine C₁- bis C₆-Alkylgruppe, bevorzugt Ethyl oder Butyl, darstellt. Ammoniumionen werden insbesondere durch die Neutralisation der Carboxylgruppe mit handelsüblichen tertiären Aminen erhalten.

R⁵ steht unabhängig voneinander für einen Rest der Formel (III)

-R⁷-(R⁸O)_{y}-R⁹ (III)

Dabei steht R⁷ unabhängig voneinander für -COO- oder -CO-NH-. R⁸ steht für eine C₂ und/oder C₃ Alkylengruppe; und R⁹ steht für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst.

Der Index y steht unabhängig voneinander für den Wert 3 - 250, vorzugsweise für 5 bis 120.

Dabei bedeuten *m*, *n* unabhängig voneinander Zahlen, wobei die Summe *m*+*n* = 100, und *m*>0, *n*>0 bedeuten; und wobei das Verhältnis *m*/*n* zwischen 1.2 und 1.6, beträgt.

Vorzugsweise steht *m* für eine Zahl von 30 - 66, vorzugsweise für 50 - 63, *n* für eine Zahl von 20 - 50, vorzugsweise für 34 - 44.

Das Verhältnis *m*/*n* bedeutet das Molverhältnis aller Carbonsäureeinheiten **A** zu allen Struktureinheiten **B**, das heisst zu allen Poly(oxyalkylen)gruppen umfassenden Einheiten, im Polymer **P.** Besonders gute Resultate werden erzielt, wenn dieses Verhältnis zwischen 1.2 und 1.6, beträgt.

Beispiele für geeignete Säureeinheiten **A** sind Einheiten, die durch Polymerisation entstehen von Acrylsäure, Methacrylsäure, oder Derivate oder Analoga davon. Insbesondere geeignet als Säureeinheit **A** ist eine Einheit, entstanden durch Polymerisation einer (Meth)acrylsäureeinheit oder ein Salz davon. Unter "(Meth)acrylsäure" wird im gesamten vorliegenden Dokument sowohl Acrylsäure als auch Methacrylsäure oder Mischungen davon verstanden.

Vorzugsweise ist die mindestens eine Säureeinheit **A** der Formel (I) teilweise oder vollständig neutralisiert. Die Säureeinheit kann als freie Säure oder auch als Salz oder Teilsalz vorliegen, wobei der Term "Salz" hier und im Folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst.

Beim Polymer **P** steht R⁵ unabhängig voneinander für -COO-(R⁸O)_{y}-R⁹ oder -CO-NH-(R⁸O)_{y}-R⁹ oder ein Gemisch von COO-(R⁸O)_{y}-R⁹ und -CO-NH-(R⁸O)_{y}-R⁹, und -(R⁸O)_{y}- steht für eine C₂ und/oder eine C₃ Polyoxyalkylengruppe, insbesondere für eine Polyoxyethylengruppe oder eine Polyoxypropylengruppe oder Mischungen von Oxyethylen- und Oxypropyleneinheiten in irgendeiner möglichen Sequenz, beispielsweise zufällig, alternierend oder blockweise, und y steht für 3 bis 250, bevorzugt für 10 bis 120. Bei einem bevorzugten Polymer **P** sind mindestens 30 Mol-%, besonders bevorzugt 50 - 100 Mol-%, noch mehr bevorzugt 80 - 100 Mol-%, am meisten bevorzugt 100 Mol-% der Struktureinheit **B** der Formel (II) durch eine Struktur dargestellt bei der R⁸ eine C₂-Alkylengruppe darstellt. Das heisst, R⁵ umfasst vorzugsweise mindestens 30 Mol-% (C₂H₄O)-Einheiten, vorzugsweise 50 bis 100 Mol-% (C₂H₄O)-Einheiten, noch mehr bevorzugt 80 bis 100 Mol-% (C₂H₄O)-Einheiten, bezogen auf die Gesamtmolmenge aller (R⁸O)-Einheiten. Insbesondere bevorzugt umfasst R⁵ 100 Mol-% (C₂H₄O)-Einheiten, bezogen auf die Gesamtmolmenge aller (R⁸O)-Einheiten. R⁹ kann je nach Herstellverfahren des Polymers **P** für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, stehen. R⁹ ist vorzugsweise ein Methylrest, und steht nicht für ein Wasserstoffatom.

Bevorzugt steht M für H oder ein Alkali- oder Erdalkalimetall. Die Säureeinheit **A** der Formel (I) stellt somit vorzugsweise eine Acryl- oder Methacrylsäureeinheit oder Salze davon dar.

Ein besonders bevorzugtes Polymer **P** umfasst oder besteht aus
a) *m* Mol-% mindestens einer Säureeinheit **A** der Formel (I'); 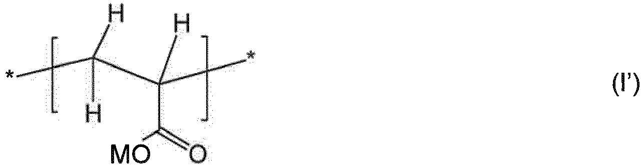 und
b) *n* Mol-% mindestens einer Struktureinheit **B** der Formel (II'); 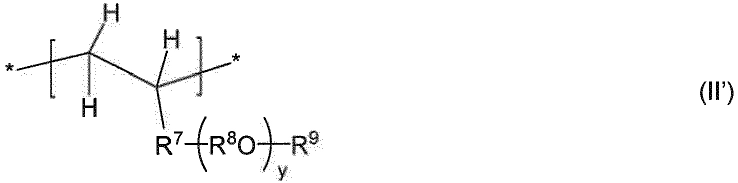
   wobei M ein H, Na, Ca/2, Mg/2, NH₄ oder ein organisches Ammonium, vorzugsweise ein H darstellt,
   wobei R⁷ für COO oder CONH steht,
   wobei R⁸ für eine Ethylengruppe steht,
   wobei R⁹ für eine C₁ bis C₁₂ Alkylgruppe, vorzugsweise eine Methylgruppe steht,
   wobei y für 3 - 250, vorzugsweise 10 bis 100 steht,
   und wobei das Molverhältnis *m*/*n* zwischen 1.2 und 1.6 beträgt.

Das Polymer **P** kann eine Kombination von verschiedenen Struktureinheiten der jeweiligen Struktureinheiten von **A** und **B** aufweisen. Beispielsweise können mehrere Struktureinheiten **A** gemischt im Polymer **P** vorkommen, so zum Beispiel ein Gemisch von Methacrylsäureeinheiten mit Acrylsäureeinheiten. Oder es können mehrere unterschiedliche Ester- und/oder Amideinheiten **B** gemischt im Polymer **P** vorkommen, so zum Beispiel mehrere Estereinheiten **B** mit verschiedenen Substituenten R⁸. Bevorzugt ist beispielsweise die gemeinsame Verwendung von Poly(oxyethylen) mit Poly(oxypropylen), oder die gemeinsame Verwendung von Poly(oxyalkylenen), insbesondere von Poly(oxyethylen), mit unterschiedlichem Molekulargewicht.

In einer bevorzugten Ausführungsform umfasst das Polymer **P** 30 bis 66 Mol-%, vorzugsweise 50 bis 63 Mol-% der Säureeinheit **A** der Formel (I), 20 bis 50 Mol-%, vorzugsweise 34 bis 44 Mol-% der Struktureinheit **B** der Formel (II), jeweils bezogen auf die Gesamtmolmenge der Struktureinheiten von **A** und **B** im Polymer **P.**

Die Abfolge der einzelnen Struktureinheiten **A** und **B** im Polymer **P** kann alternierend, statistisch, blockweise oder zufällig sein.

Das Polymer **P** weist vorzugsweise ein Molekulargewicht M_{w} im Bereich von 10'000 - 150'000 g/mol, vorzugsweise 15'000 - 100'000 g/mol, besonders bevorzugt 20'000-80'000 g/mol, auf.

Unter Molekulargewicht' oder 'Molgewicht' versteht man im Sinne der Erfindung das Molekulargewichtsmittel M_{w}.

Das Polymer **P** kann prinzipiell auf verschiedene Arten hergestellt werden. Es sind im Wesentlichen zwei Verfahren im Einsatz. In einem ersten und erfindungsgemässen Verfahren werden die Polymere in einer sogenannten polymeranalogen Umsetzung aus einem Polycarboxylat und den jeweiligen Alkoholen und Aminen hergestellt. In einem zweiten und nicht erfindungsgemässen Verfahren werden die Polymere aus den jeweiligen ungesättigten Carbonsäure-, und Ester-, Ether-, Amid- und/oder Imidfunktionenellen Monomeren durch radikalische Polymerisation hergestellt.

Erfindungsgemäss werden die Polymere nach der polymeranalogen Reaktion gemäss dem ersten Verfahren hergestellt. Die polymeranaloge Umsetzung weist den grossen Vorteil auf, dass aus kommerziell erhältlichen Polymeren aus α-,β-ungesättigten Säuren, insbesondere aus Mono- oder Dicarbonsäuren, speziell aus Poly(meth)acrylsäuren, durch Variation der Menge, der Art und dem Verhältnis von Alkohol und Amin, in einfacher und sicherer Weise sehr unterschiedliche Kammpolymere mit sehr unterschiedlichen Eigenschaften erhalten werden können. Solche polymeranalogen Umsetzungen sind beispielsweise in WO97/35814A1, WO95/09821A2, DE 100 15 135A1, EP 1138697A1, EP1348729A1 sowie WO2005/090416A1 beschrieben. Details zur polymeranalogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen Beispielen. Polymer **P** kann auch in festem Aggregatszustand erhalten werden, wie in EP 1 348 729 A1 auf Seite 3 bis Seite 5 sowie in dessen Beispielen beschrieben.

Es wird also ein Polymer **P** verwendet, wobei das Polymer **P** erhältlich ist durch die Reaktion von (a) mindestens einer Polycarbonsäure oder einem Analogon einer Polycarbonsäure; und (b) mindestens einer Monohydroxyverbindung **E** und mindestens einer Monoaminverbindung **F** umfassend mindestens eine Polyoxyalkylengruppe.

Unter Polycarbonsäure oder Analogon einer Polycarbonsäure versteht man ein Homo- oder Copolymer, welches durch Polymerisation von mindestens einem Monomer **a** und gegebenenfalls mindestens einem Monomer **b** erhalten werden kann. Monomer **a** ist ausgewählt aus der Gruppe umfassend ungesättigte Monocarbonsäuren, Analoga derselben und Mischungen derselben. Ungesättigte Monocarbonsäuren umfassen vorzugsweise Acrylsäure oder Methacrylsäure. Unter Analogon einer Monocarbonsäure oder Polycarbonsäure versteht man im Sinne der vorliegenden Erfindung Säuresalze, Säurehalogenide, Säureanhydride und Säureester, im besonderen Alkyl-Säureester.

Monomer **b** ist vorzugsweise ausgewählt aus der Gruppe von ethylenisch ungesättigten Monomeren umfassend α-β-ungesättigte Monocarbonsäuren, α-β-ungesättigte Monocarbonsäureester, α-β-ungesättigte Carboxylate, insbesondere Methacrylsäure, Acrylsäure, sowie deren Salze, Ester und Mischungen davon.

Bevorzugt als Copolymer ist ein Copolymer aus Acrylsäure und Methacrylsäure sowie deren Salze oder Teilsalze.

Bevorzugt als Homopolymer ist Polymethacrylsäure, deren Salze oder Teilsalze.

Die Polycarbonsäure oder das Analogon der Polycarbonsäure kann hierbei als freie Säure oder als Teilsalz vorliegen, wobei der Term "Salz" hier und im Folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst. Bei der Herstellung der Polycarbonsäure oder des Analogons der Polycarbonsäure sind allenfalls verwendete Initiatoren, Co-Initiatoren und Polymerisationsregler gegebenenfalls so zu wählen, dass in Polymer **P** vorzugsweise keine reaktionsfähigen Hydroxyl- oder Aminfunktionen vorhanden sind.

Unter "Monohydroxy-Verbindung" wird hier und im Folgenden eine Substanz verstanden, die nur eine freie Hydroxylgruppe aufweist.

Unter "Monoamin-Verbindung" wird hier und im Folgenden eine Substanz verstanden, die nur eine freie Aminogruppe aufweist.

Das Homo- oder Copolymer der Polycarbonsäure oder des Anologons der Polycarbonsäure wird durch eine radikalische Polymerisation nach üblichen Verfahren erhalten. Sie kann in Lösungsmittel, bevorzugt in Wasser oder in Substanz, erfolgen. Diese radikalische Polymerisation erfolgt bevorzugt in Gegenwart von mindestens einem Molekulargewichtsregler, insbesondere einer anorganischen oder organischen Schwefelverbindung, wie beispielsweise Mercaptanen, oder einer Phosphorverbindung. Das Homo- oder Copolymer der Polycarbonsäure oder des Anologons der Polycarbonsäure weist vorzugsweise ein Molekulargewicht M_{w} von 500 bis 20'000 g/mol, bevorzugt von 2'000 bis 10'000 g/mol, insbesondere bevorzugt von 3'500 bis 6'500 g/mol, auf.

Die Monohydroxy-Verbindung **E** ist vorzugsweise mit unter üblichen Reaktionsbedingungen nicht reaktiven Endgruppen einseitig abgeschlossen. Es handelt sich hierbei um ein Polymer mit einem Polyalkylenglykol-Grundgerüst. Die Monohydroxy-Verbindung **E** weist die Formel (IV) auf

HO-(R⁸O)_{y}-R^{9'} (IV)

wobei R⁸ unabhängig voneinander eine C₂ und/oder C₃ Alkylengruppe bedeutet mit einer Reihenfolge der (R⁸O)-Einheite in irgendeiner möglichen Sequenz; wobei R^{9'} für einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht; und wobei y unabhängig voneinander für 3 bis 250, vorzugsweise 10 bis 120 steht.

Bevorzugt sind Monohydroxy-Verbindungen **E** der Formel (IV) mit einer Methyl-, Ethyl-, i-Propyl- oder n-Butylgruppe, insbesondere mit einer Methylgruppe, als Substituent R^{9'}. R⁸ steht unabhängig voneinander für eine C₂-Alkylengruppe und/oder eine C₃-Alkylengruppe. Bevorzugt handelt es sich bei **E** um Mischpolymerisate aus Ethylenoxid/Propylenoxid, mehr bevorzugt um einseitig endgruppenverschlossenes Polyethylenglykol.

Mischungen mehrerer unterschiedlicher Verbindungen der Gruppe **E** sind ebenfalls möglich. So können beispielsweise einseitig endgruppenverschlossene Polyethylenglykole mit unterschiedlichen Molekulargewichten gemischt werden, oder es können beispielsweise Mischungen von einseitig endgruppenverschlossenen Polyethylenglykolen mit einseitig endgruppenverschlossenen Mischpolymeren aus Ethylenoxid und Propylenoxid oder einseitig endgruppenverschlossenen Polypropylenglykolen verwendet werden.

Unter ,mit unter üblichen Reaktionsbedingungen nicht reaktiven Endgruppen abgeschlossen' versteht man im Sinne der Erfindung, dass anstelle von für die Veresterung oder Amidierung reaktiven funktionellen Gruppen solche Gruppen vorhanden sind, welche nicht mehr zur Reaktion befähigt sind. Die üblichen Reaktionsbedingungen sind diejenigen, welche der Fachmann für Veresterungen und Amidierungen kennt. Bei 'inseitig abgeschlossen' Verbindungen ist nur eine Seite nicht mehr zur Reaktion fähig.

Die Monohydroxy-Verbindung **E** ist ein einseitig endgruppenverschlossenes Polyalkylenglykol mit einem Molekulargewicht M_{w} von 800 bis 10'000 g/mol, insbesondere von 800 bis 8000 g/mol, bevorzugt von 1000 bis 6000 g/mol. Geeignet ist auch eine Mischung von einseitig endgruppenverschlossenen Polyalkylenglykolen mit unterschiedlichem Molekulargewicht, beispielsweise die Mischung von Polyalkylenglykolen mit einem Molekulargewicht von 1'000 g/mol mit Polyalkylenglykolen mit einem Molekulargewicht von 5'000 g/mol.

Zusätzlich zur Monohydroxy-Verbindung **E** wird im ersten Verfahren eine Monoaminverbindung **F** eingesetzt. Dadurch erfolgt die Bildung von Amidgruppen.

Die Monoaminverbindungen **F** lassen sich durch die Formel (V) darstellen

NH₂-(R⁸O)_{y}-R⁹ (V)

Die Substituenten R⁸ und R⁹ beziehungsweise der Index y weisen unabhängig voneinander dieselben Bedeutungen auf wie sie bereits für die Formel (III) definiert wurden. R⁹ kann in der Formel (V) je nach Herstellverfahren des Polymers **P** für H, einen C₁ - C₁₂ Alkyl- oder Cycloalkylrest, einen C₇ - C₂₀ Alkylaryl- oder Aralkylrest, oder einen substituierten oder unsubstituierten Arylrest oder einen einwertigen organischen Rest mit 1 bis 30 C-Atomen, welcher gegebenenfalls Heteroatome umfasst, stehen. Wird das Polymer **P** über die polymeranaloge Reaktion hergestellt, und werden die gegebenenfalls gebildeten Anhydridgruppen nicht in einem zweiten Schritt vollständig oder teilweise mit einer Aminverbindung zu einem Amid umgesetzt, ist R⁹ der Formel (V) vorzugsweise R^{9'}, insbesondere ein Methylrest, und steht nicht für ein Wasserstoffatom.

Beispiele für solche Monoaminverbindungen **F** sind α-Methoxy-ω-Amino-Polyoxyethylen, α-Methoxy-ω-Amino-Polyoxypropylen, α-Methoxy-ω-Amino-Oxyethylene-Oxypropylen-Copolymer.

Besonderes bevorzugt als Monoaminverbindungen **F** sind α-Methoxy-ω-Amino-Oxyethylen-Oxypropylen-Copolymere, wie beispielsweise Jeffamin® M-2070, oder α-Methoxy-ω-Amino-Polyoxyethylene, sowie andere Monoamine, welche beispielsweise von der Firma Huntsman unter dem Namen Jeffamine® der M-Serie vertrieben werden, sowie Mischungen davon. Meist bevorzugt sind α-Methoxy-ω-Amino-Oxyethylen-Oxypropylen-Copolymere. Solche Monoaminverbindungen **F** sind beispielsweise erhältlich aus einer mit Alkohol gestarteten Polymerisation von Ethylen- und/oder Propylenoxid gefolgt von Umwandlung der terminalen Alkoholgruppe in eine Amingruppe

Die Umsetzung der Polycarbonsäure oder dem Analogon der Polycarbonsäure mit mindestens einer Monohydroxy-Verbindung **E** und mit mindestens einer Monoaminverbindung **F** zu einem Polymer **P** erfolgt bei der polymeranalogen Reaktion typischerweise derart, dass zur Polycarbonsäure oder dem Analogon der Polycarbonsäure unter Rühren die mindestens eine Monohydroxy-Verbindung **E** und die mindestens eine Monoaminverbindung **F** zugegeben wird und auf die Umsetzungstemperatur aufgeheizt wird. Die Mischung wird weitergerührt und eventuell unter Vakuum oder durch Über- oder Durchleiten eines Gasstromes über beziehungsweise durch die Reaktionsmasse umgesetzt. Die Temperatur für diese Umsetzung ist beispielsweise zwischen 140°C und 200°C. Die Reaktion ist aber auch bei Temperaturen zwischen 150°C und 175°C möglich. Die Zugabe der Monoaminverbindung **F** kann gleichzeitig mit der Monohydroxy-Verbindung **E** oder aber zu einem späteren Zeitpunkt während dieses Reaktionsschrittes erfolgen.

In einer bevorzugten Ausführungsform wird diese Umsetzung in Gegenwart eines Veresterungskatalysators, insbesondere einer Säure durchgeführt. Bevorzugt handelt es sich bei einer solchen Säure um Schwefelsäure, p-Toluolsulfonsäure, Benzolsulfonsäure, Methansulfonsäure, Phosphorsäure oder phosphorige Säure. Bevorzugt ist Schwefelsäure. Die Entfernung des Wassers aus der Reaktionsmischung kann unter Atmosphärendruck aber auch unter Vakuum erfolgen. Auch kann ein Gasstrom über oder durch die Reaktionsmischung geführt werden. Als Gasstrom kann Luft oder Stickstoff verwendet werden.

Die Umsetzung kann mittels Messung der Säurezahl, beispielsweise durch Titration, verfolgt werden und bei einer gewünschten Säurezahl, so dass der gewünschte Säuregehalt erreicht wird, abgebrochen werden. Die Reaktion wird durch Aufheben des Vakuums und Abkühlen abgebrochen.

In einer bevorzugten Ausführungsform wird eine Polyacrylsäure mit einem Polyoxyethylen welches einseitig mit einer Methylgruppe abgeschlossen ist, verestert und mit dem Monoamin umgesetzt.

Bei der sogenannten polymeranalogen Reaktion können neben Estergruppen und Amidgruppen auch Anhydridgruppen gebildet werden, welche in einem zweiten Schritt vollständig oder teilweise mit einer Aminverbindung zu einem Amid umgesetzt werden können. Solche Verfahren werden beispielsweise in WO2005/090416A1 beschrieben.

In einem zweiten und nicht erfindungsgemässen Herstellverfahren wird das Polymer **P** über die radikalische Polymerisation hergestellt. Der Weg über die radikalische Polymerisation ist die gängigste Methode, sie ist allerdings bei speziellen Verbindungen erschwert durch die kommerzielle Verfügbarkeit der entsprechenden Monomere und bedarf einer aufwändigen Prozesskontrolle.

Falls das Polymer **P** in flüssiger Form verwendet wird, wird für die Umsetzung vorzugsweise ein Lösungsmittel eingesetzt. Bevorzugte Lösungsmittel sind beispielsweise Alkohole, insbesondere Ethanol oder Isopropanol, und Wasser, wobei Wasser das am meist bevorzugte Lösungsmittel ist.

Das Polymer **P** kann auch in festem Aggregatszustand vorliegen. Unter Polymere im festen Aggregatszustand versteht man im Sinne der Erfindung Polymere, die bei Raumtemperatur im festen Aggregatzustand vorliegen und beispielsweise Pulver, Schuppen, Pellets, Granulate oder Platten sind und sich in dieser Form problemlos transportieren und lagern lassen.

Das Polymer **P** kann im festen Aggregatszustand ein Bestandteil einer sogenannten Trockenmischung, beispielsweise einer Zementzusammensetzung, sein, die über längere Zeit lagerfähig ist und typischerweise in Säcken abgepackt oder in Silos gelagert wird und zum Einsatz kommt. Eine solche Trockenmischung ist auch nach längerer Lagerungszeit einsetzbar und weist eine gute Rieselfähigkeit auf.

Das Polymer **P** kann auch einer üblichen hydraulisch abbindenden Zusammensetzung mit oder kurz vor oder kurz nach der Einmischung des Wassers beigegeben werden. Als besonders geeignet gezeigt hat sich hierbei die Zugabe des Polymers **P** in Form einer wässrigen Lösung oder Dispersion, insbesondere als Anmachwasser oder als Teil des Anmachwassers. Die Herstellung der wässrigen Lösung oder Dispersion erfolgt durch Zusetzen von Wasser bei der Herstellung des Polymers **P** oder durch nachträgliches Vermengen von Polymer **P** mit Wasser. Je nach Art des Polymers **P** entsteht eine Dispersion oder eine Lösung. Bevorzugt wird eine Lösung.

Es kann weiter vorteilhaft sein, dass die wässrige hydraulisch abbindende Zusammensetzung **Z1** zusätzlich ein Fliessmittel ausgewählt aus der Gruppe bestehend aus Lignosulfonat, Naphthalinsulfonsäure-Formaldehyd-Kondensat, sulfoniertem Melamin-Formaldehyd-Kondensat, Melasse und Gluconat aufweist.

In einem weiteren Aspekt betrifft die vorliegende Erfindung ein Verfahren zur zeitlichen Verlängerung der Fliessfähigkeit von wasserreduzierten wässrigen hydraulisch abbindenden Zusammensetzungen, wobei einer wässrigen hydraulisch abbindenden Zusammensetzungen **Z1** umfassend Wasser und hydraulisches Bindemittel, welche ausser einem 5 - 15 % geringeren Wassergehalt eine identische Zusammensetzung aufweist wie eine wässrige hydraulisch abbindende Referenzzusammensetzungen **Z2, Z1** zusätzlich Polymer **P** zugegeben wird. Dabei weisen **Z1** sowie **Z2:**
i.) ein Ausbreitmass nach EN 1015-3, respektive EN 12350-5, unmittelbar nach Einmischung des Wassers von 220 - 180 mm, respektive 450 - 550 mm, auf, und
ii.) einen Unterschied des Ausbreitmasses nach EN 1015-3, respektive EN 12350-5, unmittelbar nach Einmischung des Wassers im Vergleich zum Ausbreitmass nach 90 Minuten von maximal 15 %, respektive maximal 20 %, auf.

Bei dem Polymer **P** handelt es sich um ein Polymer **P** wie es vorhergehend beschrieben wurde. Das Polymer **P** kann sowohl in flüssiger als auch in fester Form verwendet werden.

Bei der hydraulisch abbindenden Zusammensetzung handelt es sich um vorhergehend erwähnte. Bevorzugt ist das hydraulische Bindemittel ausgewählt aus der Gruppe bestehend aus Zement; Mischungen aus Zement mit Flugaschen, Silica fume, Schlacke, Hüttensande oder Kalksteinfiller; Gips; und gebrannter Kalk. Besonders bevorzugt ist Zement.

Es kann weiter vorteilhaft sein, der wässrigen hydraulisch abbindenden Zusammensetzungen **Z1** zusätzlich ein Fliessmittel ausgewählt aus der Gruppe bestehend aus Lignosulfonat, Naphthalinsulfonsäure-Formaldehyd-Kondensat, sulfoniertem Melamin-Formaldehyd-Kondensat, Melasse und Gluconat aufweist.

### Beispiele

Die Erfindung wird nun anhand von Beispielen näher erläutert.

### 1. Verwendete Polymere P

**Tabelle 1 Verwendete Abkürzungen. Mw = mittleres Molekulargewicht**

| **Abkürzung** | **Bedeutung** | **Mw** |
|---|---|---|
| PEG520 | Poly(oxyethylen) ohne terminale OH-Gruppen | 520 g/mol |
| PEG1000 | Poly(oxyethylen) ohne terminale OH-Gruppen | 1000 g/mol |
| PEG3000 | Poly(oxyethylen) ohne terminale OH-Gruppen | 3000 g/mol |
| PEG5000 | Poly(oxyethylen) ohne terminale OH-Gruppen | 5000 g/mol |
| EO/PO(70/30)2000 | Block-Copolymer aus Ethylenoxid und Propylenoxid im Verhältnis 70:30 ohne terminale OH-Gruppen | 2000 g/mol |

Es wurden die in Tabelle 2 angegebenen Polymere **P-1, P-2** und **P-4** bis **P-8** sowie die Vergleichsbeispiele **V-1** bis **V-3** mittels polymeranaloger Umsetzung aus Polyacrylsäure mit den korrespondierenden Alkoholen und/oder Aminen nach bekannter Art und Weise hergestellt (**P-4** und **P-8** sind nicht erfindungsgemässe Polymere). Details zur polymeranalogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen Beispielen.

So wurde beispielsweise Polymer **P-4** mittels polymeranaloger Umsetzung folgendermassen hergestellt: In einen Rundkolben mit mechanischem Rührer (IKA®-Rührwerk), Thermometer, Gaseinleitrohr und Destillationsbrücke wurden 160 g einer 50-prozentigen wässrigen Lösung (entspricht etwa 1 Mol Säureeinheiten) von Polyacrylsäure (PAS, mit einem mittleren Molekulargewicht M_{w} von etwa 5000 g/mol) vorgelegt. Die Mischung wurde auf 50°C erwärmt und 210 g Polyethyleneglykol-Monomethylether (MPEG, mit einem mittleren Molekulargewicht M_{w} von etwa 520 g/mol) und 3 g Jeffamine® M-2070 zugegeben. Die Reaktionsmischung wurde unter N₂-Strom auf 175°C erwärmt. Das in der Mischung enthaltene Wasser sowie das Reaktionswasser wurden kontinuierlich unter N₂-Strom abdestilliert. Mit Erreichen der Temperatur wurden 3 g einer 66%igen Kalium-Acetat-Lösung zur Reaktionsmischung gegeben und ein Vakuum von 80 mbar angelegt. Nach 2 ½ Stunden war ein vollständiger Reaktionsumsatz erreicht. Die Polymerschmelze wurde erstarren gelassen oder aber nach dem Abkühlen auf <100°C mit 1160 g Wasser versetzt, um eine 20%ige Polymerlösung zu erhalten.

Die Polymere **P-1, P-2** und **P-4** bis **P-8** sowie Polymere für die Vergleichsbeispiele **V-1** bis **V-3** wurden in gleicher Weise wie Polymer **P-4** hergestellt.

Bei Vergleichsbeispiel **V-4** wurde ein kommerziell erhältlicher, auf Naphthalinsulfonsäure-Formaldehyd-Kondensat-Basis hergestellter Verflüssiger (beispielsweise Flube OS 39, erhältlich bei Bozzetto AG) verwendet. Bei Vergleichsbeispiel **V-5** wurde ein kommerziell erhältlicher, auf Lignosulfonat-Basis hergestellter Verflüssiger (beispielsweise Borresperce® Ca, erhältlich bei Borregaard LignoTech AG) verwendet. Bei Vergleichsbeispiel **V-6** wurden kommerziell erhältliche Lignosulfonate und Karbohydrate (beispielsweise Borresperse® Ca, erhältlich bei Borregaard LignoTech AG und Melasse, erhältlich bei Zuckerfabrik Frauenfeld AG) im Verhältnis 55:4 (Trockengehalt) abgemischt und als Verflüssiger verwendet.

**Tabelle 2 Verwendete Polymere P-1, P-2 und P-4 bis P-8 bzw. Vergleichspolymere V-1, V-2 und V-3 enthalten die Struktureinheiten A der Formel (I) und die Struktureinheiten B der Formel (II) mit R²=H, R³=H, R⁴=COOM, R⁶=H, M= H⁺, Na⁺; * bedeutet Molverhältnis der verschiedenen R⁵ Seitenketten; Mol-% bedeutet Mol-% der einzelnen Einheiten im Endpolymer**

| **Nr.** | **R¹** | **R5** | | **Mw** | ***Mol-%** im Endpolymer* | ***m*/*n*** |
|---|---|---|---|---|---|---|
| **P-1** | -CH3 | -COO-PEG1000-CH3: | 99.5 | 40000 | *m* = 60 | 1.5 |
| | | -CO-NH-EO/PO(70/30)2000-CH3 | 0.5* | | *n* = 40 | |
| | | | | | *p* = 0 | |
| **P-2** | -H | -COO-PEG1000-CH3: | 99.8 | 35000 | *m* = 57 | 1.3 |
| | | -CO-NH-EO/PO(70/30)2000-CH3 | 0.2* | | *n* = 43 | |
| | | | | | *p* = 0 | |
| **P-4** | -H | -COO-PEG520-CH3: | 99.7 | 20000 | *m* = 60 | 1.5 |
| | | -CO-NH-EO/PO(70/30)2000-CH3 | 0.3* | | *n* = 40 | |
| | | | | | *p* = 0 | |
| **P-5** | -H | -COO-PEG1000-CH3: | 99.7 | 30000 | *m* = 60 | 1.5 |
| | | -CO-NH-EO/PO(70/30)2000-CH3 | 0.3* | | *n* = 40 | |
| | | | | | *p* = 0 | |
| **P-6** | -H | -COO-PEG520-CH3: | 65.7 | 25000 | *m* = 56 | 1.3 |
| | | -COO-PEG1000-CH3: | 34 | | *n* = 44 | |
| | | -CO-NH-EO/PO(70/30)2000-CH3 | 0.3 | | *p* = 0 | |
| **P-7** | -H | -COO-PEG520-CH3: | 45.1 | 30000 | *m* = 58 | 1.4 |
| | | -COO-PEG1000-CH3: | 54.6 | | *n* = 42 | |
| | | -CO-NH-EO/PO(70/30)2000-CH3 | 0.3 | | *p* = 0 | |
| **P-8** | - CH3 | -COO-PEG1000-CH3: | 100 | 40000 | *m* = 60 | 1.5 |
| | | | | | *n* = 40 | |
| | | | | | *p* = 0 | |
| **V-1** | -CH3 | -COO-PEG1000-CH3: | 53.9 | 50'000 | *m* = 75.5 | 3.1 |
| | | -COO-PEG3000-CH3: | 45.3 | | *n* = 24.5 | |
| | | -CO-NH-EO/PO(70/30)2000-CH3 | 0.8 | | *p* = 0 | |
| **V-2** | -H | -COO-PEG1000-CH3: | 29.3 | 40'000 | *m* = 76.3 | 3.2 |
| | | -COO-PEG3000-CH3: | 70.4 | | *n* = 23.7 | |
| | | -CO-NH-EO/PO(70/30)2000-CH3 | 0.3 | | *p* = 0 | |
| **V-3** | -H | -COO-PEG1000-CH3: | 18.8 | 35'000 | *m* = 84.1 | 5.3 |
| | | -COO-PEG3000-CH3: | 79.9 | | *n* = 15.9 | |
| | | -CO-NH-EO/PO(70/30)2000-CH3 | 1.3 | | *p* = 0 | |

### 2. Mörteltests

Die Wirksamkeit der erfindungsgemässen Polymeren wurde im Mörtel getestet.

| Zusammensetzung der Mörtelmischung **(MM):** (Grösstkorn 8mm) | Menge |
|---|---|
| Zement (Schweizer CEM I 42.5) | 750 g |
| Kalksteinfiller | 141 g |
| Sand 0-1 mm | 738 g |
| Sand 1-4 mm | 1107 g |
| Sand 4-8 mm | 1154 g |

Die Sande, der Filler und der Zement wurden 1 Minute in einem Hobart-Mischer trocken gemischt. Innerhalb von 30 Sekunden wurde das Anmachwasser, in dem die in Tabelle 3 angegebene Menge bezogen auf den Zement einer 20-%igen wässrigen Lösung eines Zusatzmittels mit dem Polymer **P-1, P-2** und **P-4** bis **P-8** (**P-4** und **P-8** sind nicht erfindungsgemässe Polymere) oder einem Vergleichspolymer **V-1** bis **V-3,** beziehungsweise der Gesamtmenge eines Vergleichsverflüssigers **V-4** bis **V-6,** gelöst war, zugegeben und noch weitere 2.5 Minuten gemischt. Die 20-%ige wässrige Lösung, welche 20 Gew.-% des erfindungsgemässen Polymers, resp. des Vergleichspolymer, enthält, enthält zudem etwa 1 Gew.-% Entschäumer. Die Gesamt-Mischzeit nass war 3 Minuten. Der Wasser/Zement-Wert (w/z-Wert) betrug 0.48. Bei den Vergleichsbeispielen **VM-7** und **VM-8** wurden keine Verflüssiger verwendet.

Die 10% Wasserreduktion werden eingestellt, indem eine Vergleichsmörtelmischung ohne wasserreduzierendes Zusatzmittel (Vergleichsbeispiel **VM-8**) auf ein Ausbreitmass (0 min) von 195 - 200 mm durch Wasserzugabe eingestellt wird. Die benötigte Wassermenge in der für die Versuche verwendeten Mörtelmischung wird dann um 10% verringert.

Das Ausbreitmass des Mörtels wurde gemäss EN 1015-3 bestimmt. Die Bestimmung des Ausbreitmass unmittelbar nach der Gesamt-Mischzeit nass von 3 Minuten ergab das Ausbreitmass gemessen nach 0 Minuten.

**Tabelle 3: Ausbreitmass (ABM) in mm gemäss EN 1015-3 nach 0, 30, 60 und 90 Minuten (min). Die Gew-% der Zusatzmittel sind angegeben als Gew.-% einer 20-% wässrigen Lösung mit den Polymeren P-1, P-2 und P-4 bis P-8 und V-1 bis V-3 beziehungsweise als Gew-% des Gesamtgewichts der Zusatzmittel V-4 bis V-6, die Gew.-% jeweils bezogen auf den Zement.**

| **Nr.** | **Zusatzmittel** | **w/z** | **Wasserreduktion** | **Gew.-% auf Zement** | **ABM (mm)** | | | | **ΔABM in % nach 90 min** |
|---|---|---|---|---|---|---|---|---|---|
| | | | | | **0 min** | **30 min** | **60 min** | **90 min** | |
| **M-1** | **P-1** | 0.48 | 10% | 0.6 | 203 | 192 | 190 | 184 | 9.3% |
| **M-2** | **P-2** | 0.48 | 10% | 0.6 | 195 | 180 | 188 | 185 | 5.2% |
| **M-4** | **P-4** | 0.48 | 10% | 0.6 | 216 | 210 | 200 | 184 | 14.8% |
| **M-5** | **P-5** | 0.48 | 10% | 0.6 | 202 | 205 | 206 | 196 | 3% |
| **M-6** | **P-6** | 0.48 | 10% | 0.6 | 182 | 180 | 185 | 178 | 2.2% |
| **M-7** | **P-7** | 0.48 | 10% | 0.6 | 192 | 190 | 190 | 175 | 8.8% |
| **M-8** | **P-8** | 0.48 | 10% | 0.6 | 208 | 192 | 192 | 184 | 11.5% |
| **VM-1** | **V-1** | 0.48 | 10% | 0.6 | 230 | 216 | 190 | 172 | 25.2% |
| **VM-2** | **V-2** | 0.48 | 10% | 0.6 | 230 | 185 | 160 | 148 | 35.6% |
| **VM-3** | **V-3** | 0.48 | 10% | 0.6 | 230 | 168 | 150 | 140 | 39% |
| **VM-1'** | **V-1** | 0.48 | 10% | 0.35 | 205 | 175 | 162 | 146 | 28.8% |
| **VM-2'** | **V-2** | 0.48 | 10% | 0.34 | 198 | 164 | 152 | 148 | 25.2% |
| **VM-3'** | **V-3** | 0.48 | 10% | 0.34 | 200 | 165 | 155 | 145 | 27.5% |
| **VM-4** | **V-4** | 0.48 | 10% | 1.4 | 204 | 168 | 150 | 145 | 28.9% |
| **VM-5** | **V-5** | 0.48 | 10% | 2 | 198 | 150 | 145 | 138 | 30.32% |
| **VM-6** | **V-6** | 0.48 | 10% | 1.8 | 202 | 152 | 145 | 140 | 30.7% |
| **VM-7** | - | 0.48 | 10% | - | 160 | 146 | 145 | 132 | 17.5% |
| **VM-8** | - | 0.54 | - | - | 204 | 190 | 183 | 177 | 13.2% |

Die Resultate in Tabelle 3 zeigen, dass die erfindungsgemässen Polymere hervorragende verflüssigende Eigenschaften aufweisen verglichen mit dem herkömmlichen Polymeren **V-1, V-2,** und **V-3** und den Vergleichsverflüssigern **V-4** bis **V-6.** Dies zeigen vor allem die Werte des Ausbreitmasses nach 30 bis 90 Minuten, wo sich das Ausbreitmass mit den Polymeren **P-1, P-2** und **P-4** bis **P-8** (**P-4** und **P-8** sind nicht erfindungsgemässe Polymere) über 90 Minuten relativ konstant hält und höchstens 15% gegenüber dem Anfangsausbreitmass nach 0 Minuten abnimmt. Besonders gute Resultate wurden mit den Polymeren **P-1, P-2,** und **P-5** bis **P-7** erzielt. Das heisst, besonders gute Resultate werden erzielt, wenn das Polymer ein tiefes Verhältnis m/n von 1.2 bis 1.6 aufweist.

Werden die Vergleichspolymere **V-1** bis **V-3** gleich dosiert wie die erfindungsgemässen Polymere (Beispiele Nr. **VM-1** bis **VM-3**), ist das Anfangsausbreitmass zu hoch und die Mörtelmischung kann separieren und ist somit nicht brauchbar. Zudem nimmt das Ausbreitmass bis nach 90 Minuten über 25% ab, verglichen mit dem Anfangsausbreitmass. Dieser Abfall des Ausbreitmasses ist in der Praxis nicht erwünscht.

Werden die Vergleichspolymere **V-1** bis **V-3** tiefer dosiert als die erfindungsgemässen Polymere (Beispiele Nr. **VM-1'** bis **VM-3'**), sodass das Anfangsausbreitmass am Anfang gleich ist wie bei den erfindungsgemässen Polymeren, nimmt das Ausbreitmass bis nach 90 Minuten ebenfalls über 25% ab, verglichen mit dem Anfangsausbreitmass, was in der Praxis nicht erwünscht ist.

Bei den Vergleichsbeispielen **VM-4** bis **VM-6** basierend auf Lignin- oder Naphthalinsulfonaten wurde mit entsprechender Dosierung das Anfangsausbreitmass auf ungefähr 200 mm eingestellt, damit die Werte mit den Erfindungsbeispielen verglichen werden können. Um dieses Anfangsausbreitmass zu erreichen, müssen die herkömmlichen Verflüssiger viel höher dosiert werden. Zudem nimmt das Ausbreitmass über 90 Minuten um über 28% ab, verglichen mit dem Anfangsausbreitmass.

Beim Vergleichsbeispiel **VM-7** wurde kein wasserreduzierendes Zusatzmittel und kein Polymer **P** verwendet. Somit liegt das Anfangsausbreitmass bei gleichem w/z-Wert wie bei den Erfindungsbeispielen viel tiefer und die Mischung kann kaum verarbeitet werden.

Beim Vergleichsbeispiel **VM-8** wurde ebenfalls kein wasserreduzierendes Zusatzmittel und kein Polymer **P** verwendet, aber mit Zugabe von mehr Wasser (w/z-Wert 0.54 und somit 10% höher als bei den vorhergehenden Beispielen) ein Anfangsausbreitmass von etwa 200 mm erreicht. Die Verarbeitbarkeit liegt damit etwa im gewünschten Bereich, allerdings weisen Mörtel- und Betonzusammensetzungen mit einem höheren w/z-Wert und somit einem höheren Wasseranteil erfahrungsgemäss wesentlich tiefere Festigkeitswerte und somit schlechtere mechanische Eigenschaften auf.

Es wird also gewünscht, Beton- und Mörtelmischungen herzustellen, welche in etwa eine Verarbeitbarkeit aufweisen, wie sie bei **VM-8** erreicht werden, welche allerdings weniger Wasser benötigen, das heisst bei denen die Wasserreduktion bei etwa 5 bis 15% liegt, und sie somit bessere Festigkeitswerte aufweisen. Dies wird mit den erfindungsgemäss verwendeten Polymeren **P-1, P-2** und **P-5** bis **P-7** erreicht.

### 3. Betonversuche

Die Wirksamkeit der erfindungsgemässen Polymeren wurde zusätzlich im Beton getestet.

| Zusammensetzung der Betonmischung (**BM**): (Grösstkorn 32mm) | Menge |
|---|---|
| Zement (Schweizer CEM I 42.5) | 750 g |
| Kalksteinfiller | 235 g |
| Sand 0-1 mm | 1170 g |
| Sand 1-4 mm | 1355 g |
| Sand 4-8 mm | 515g |
| Kies 8-16 mm | 608 g |
| Kies 16-32 mm | 795 g |

Die Kiese, die Sande, der Filler und der Zement wurden 30 Sekunden in einem Fallmischer trocken gemischt. Innerhalb von 30 Sekunden wurde das Anmachwasser, in dem die in Tabelle 4 angegebene Menge bezogen auf den Zement einer 20-%igen wässrigen Lösung eines Zusatzmittels mit dem erfindungsgemässen Polymer **P-1** oder dem Vergleichspolymer **V-1,** beziehungsweise der Gesamtmenge einer Formulierung **F-P1** (entspricht einer 28.25 %-igen wässrigen Lösung) oder eines Vergleichsverflüssigers **V-5,** gelöst war, zugegeben und noch weitere 1.5 Minuten gemischt. Die 20-%ige wässrige Lösung, welche 20 Gew.-% des erfindungsgemässen Polymers beziehungsweise des Vergleichspolymers enthält, enthält zudem etwa 1 Gew.-% Entschäumer. Die Gesamt-Mischzeit nass war 2 Minuten. Der Wasser/Zement-Wert (w/z-Wert) betrug 0.6. Die 10 % Wasserreduktion werden eingestellt, indem eine Betonmischung ohne wasserreduzierendes Zusatzmittel auf ein Ausbreitmass (0 min) von 500-600 mm durch Wasserzugabe eingestellt wird. Die benötigte Wassermenge wird dann um 10% verringert.

Die Formulierung **F-P1** enthält 13 Gew.-% Polymer **P-1,** 13 Gew.-% eines auf Lignosulfonat-Basis hergestellter Verflüssiger (Borresperce ® Ca, erhältlich bei Borregaard LignoTech AG), 2.25 Gew.-% Melasse (erhältlich bei Zuckerfabrik Frauenfeld AG), in 71.75 Gew.-% Wasser, was einer 28.25 %-igen wässrigen Lösung entspricht.

Da die Zusammensetzung der Betonmischung Kies mit Grösstkorn von 32mm aufweist, wurde das Ausbreitmass des Beton gemäss EN 12350-5 bestimmt. Die Bestimmung des Ausbreitmass unmittelbar nach der Gesamt-Mischzeit nass von 2 Minuten ergab das Ausbreitmass gemessen nach 0 Minuten.

**Tabelle 4: Ausbreitmass (ABM) in mm gemäss EN 12350-5 nach 0, 30, 60 und 90 Minuten (min)**

| **Nr** | **Zusatzmittel** | **w/z** | **Wasserreduktion** | **Gew**.-% **auf Zement** | **ABM (mm)** | | | | **ΔABM in % nach 90 min** |
|---|---|---|---|---|---|---|---|---|---|
| | | | | | **0 min** | **30 min** | **60 min** | **90 min** | |
| **B-1** | **P-1** | 0.6 | 10% | 0.6 | 540 | 510 | 490 | 460 | 14.8% |
| **B-2** | **F-P1** | 0.6 | 10% | 0.6 | 520 | 460 | 430 | 430 | 17.3% |
| **VB-1** | **V-1** | 0.6 | 10% | 0.35 | 510 | 440 | 410 | 380 | 25.5% |
| **VB-5** | **V-5** | 0.6 | 10% | 1.4 | 520 | 410 | 390 | 360 | 30.7% |
| **VB-8** | **-** | 0.67 | | - | 530 | 460 | 440 | 420 | 20.7% |

Die Resultate in der Tabelle 4 zeigen, dass auch in Betonzusammensetzungen mit dem Polymer **P-1** eine längere Verarbeitbarkeit erreicht wird als bei Zusammensetzungen mit einem herkömmlichen Verflüssiger und ohne Polymer **P.** Selbst mit Formulierungen, welche das Polymer **P-1** enthalten (**F-P1**) wird eine längere Verarbeitbarkeit erreicht.

Beim Vergleichsbeispiel **VB-1** muss weniger Polymer dosiert werden, um das gewünschte Anfangsausbreitmass zu erreichen. Allerdings nimmt dann die Verarbeitbarkeit über Zeit stark ab und die Betonzusammensetzung ist schlecht verarbeitbar.

Beim Vergleichsbeispiel **VB-5** liegt die Dosierung zwar viel höher, um das gewünschte Anfangsausbreitmass zu erreichen. Trotzdem nimmt die Verarbeitbarkeit über Zeit stark ab und die Betonzusammensetzung ist ebenfalls kaum noch verarbeitbar.

Beim Vergleichsbeispiel **VB-8** muss eine um 10% höhere Wassermenge eingesetzt werden, um das gewünschte Anfangsausbreitmass zu erreicht. Einerseits nimmt die Verarbeitbarkeit stärker ab als mit dem erfindungsgemässen Polymer **P,** andererseits nimmt die Festigkeit der hergestellten Betonzusammensetzung durch den erhöhten Wasserbedarf stark ab und die Betonzusammensetzung weist dadurch schlechtere mechanische Eigenschaften auf (Tabelle 5).

Zur Bestimmung der mechanischen Eigenschaften wurden die Druckfestigkeiten an Würfeln (120x120x120mm) mittels einer hydraulischen Presse ermittelt (Tabelle 5).

**Tabelle 5: Druckfestigkeiten in N/mm² nach 1 und 28 Tagen (d) (Betontemperatur 30 °C).**

| **Nr.** | **Zusatzmittel** | **w/z** | **Gew.-% auf Zement** | **Druckfestigkeit (N/mm²)** | |
|---|---|---|---|---|---|
| | | | | **1 d** | **28 d** |
| **B-2** | **F-P1** | 0.6 | 0.6 | 19.8 | 38.9 |
| **VB-8** | - | 0.67 | - | 15.1 | 31.7 |

In Tabelle 5 ist ersichtlich, dass eine Betonmischung ohne wasserreduzierendes Zusatzmittel aber mit einem höheren w/z-Wert, um das gewünschte Anfangsausbreitmass zu erhalten, deutlich schlechtere Festigkeitswerte nach einem und nach 28 Tagen aufweist verglichen mit einer Betonmischung, welche die Formulierung **F-P1** umfassend das Polymer **P-1** enthält.

Selbstverständlich ist die Erfindung nicht auf die gezeigten und beschriebenen Ausführungsbeispiele beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der Erfindung zu verlassen.

## Patentansprüche

1. Verwendung eines Polymers **P** zur zeitlichen Verlängerung der Fliessfähigkeit von wasserreduzierten wässrigen hydraulisch abbindenden Zusammensetzungen, wobei sich eine zeitliche Verlängerung der Fliessfähigkeit dadurch äussert, dass **Z1** sowie **Z2:**
i.) ein Ausbreitmass nach EN 1015-3, respektive EN 12350-5, unmittelbar nach Einmischung des Wassers von 220 - 180 mm, respektive 450 - 550 mm, aufweisen, und
ii.) einen Unterschied des Ausbreitmasses nach EN 1015-3, respektive EN 12350-5, unmittelbar nach Einmischung des Wassers im Vergleich zum Ausbreitmass nach 90 Minuten von maximal 15 %, respektive maximal 20 %, aufweisen;
wobei es sich bei **Z1** um eine wässrige hydraulisch abbindende Zusammensetzungen umfassend Wasser und hydraulisches Bindemittel handelt, welche eine identische Zusammensetzung aufweist wie eine wässrige hydraulisch abbindende Referenzzusammensetzungen **Z2,** mit dem Unterschied, dass **Z1** zusätzlich Polymer **P** und 5 - 15 % weniger Wasser als **Z2** enthält und wobei Polymer **P** besteht aus:
a) *m* Mol-% mindestens einer Säureeinheit **A** der Formel (I); und 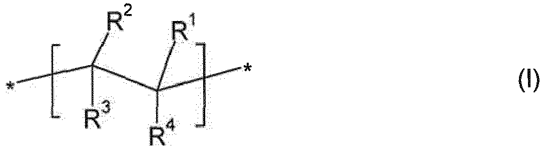
b) *n* Mol-% mindestens einer Struktureinheit B der Formel (II); 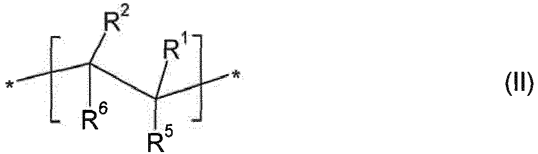
wobei im Polymer **P** R¹ H oder CH₃ ist und R², R³, R⁶ für H stehen und R⁴ für COOM steht;
wobei M für H, Alkalimetall, Erdalkalimetall, Ammonium, Alkyl-Ammonium, oder Mischungen davon steht;
wobei R⁵ unabhängig voneinander für einen Rest der Formel (III) steht
-R⁷-(R⁸O)_{y}-R⁹ (III)
wobei R⁷ je unabhängig voneinander für -COO- oder CONH- steht;
wobei R⁸ je unabhängig voneinander für eine C₂ und/oder eine C₃ Alkylengruppe steht,
wobei R⁹ je unabhängig voneinander für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht;
wobei y unabhängig voneinander für den Wert 3 - 250 steht;
wobei m, *n* unabhängig voneinander Zahlen bedeuten, wobei die Summe *m*+*n* = 100, und *m*>0, *n>0* bedeuten; und wobei das Verhältnis *m*/*n* zwischen 1.2 und 1.6 beträgt;
und wobei das Polymer **P** erhältlich ist durch oder hergestellt wird mittels polymeranaloger Reaktion der Veresterung und Amidierung einer Polycarbonsäure oder einem Analogon davon; durch die Reaktion von
a) mindestens einer Polycarbonsäure oder einem Analogon einer Polycarbonsäure; und
b) mindestens einer Monohydroxyverbindung **E** der Formel (IV) und mindestens einer Monoaminverbindung **F** der Formel (V);
wobei
HO-(R⁸O)_{y}-R^{9'} (IV)
wobei
NH₂-(R⁸O)_{y}-R⁹ (V)
wobei R⁸ je unabhängig voneinander eine C₂ und/oder eine C₃ Alkylengruppe bedeutet mit einer Reihenfolge der (R⁸O)-Einheite in irgendeiner möglichen Sequenz;
wobei R^{9'} für einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht;
wobei R⁹ für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht; und
wobei y je unabhängig voneinander je den Werte 3 - 250 aufweist;
und wobei die Monohydroxyverbindung **E** ein einseitig endgruppenverschlossenes Polyalkylenglykol mit einem Molekulargewicht M_{w} von 800 - 10'000 g/mol ist;

2. Verwendung gemäss Anspruch 1, **dadurch gekennzeichnet, dass** das Analogon der Polycarbonsäure des Polymers **P** ausgewählt ist aus der Gruppe Säuresalze, Säurehalogenide und Säureanhydride.

3. Verwendung gemäss einem der vorhergehenden Ansprüche, **dadurch gekennzeichnet, dass** R⁵ mindestens 30 Mol-% (C₂H₄O)-Einheiten, vorzugsweise 50 bis 100 Mol-% (C₂H₄O)-Einheiten, noch mehr bevorzugt 80 bis 100 Mol-% (C₂H₄O)-Einheiten umfasst, bezogen auf die Gesamtmolmenge aller (R⁸O)-Einheiten.

4. Verwendung gemäss einem der vorhergehenden Ansprüche, wobei das Polymer **P** 30 bis 66 Mol-%, vorzugsweise 50 bis 63 Mol-% Säureeinheit **A,** 20 bis 50 Mol-%, vorzugsweise 34 bis 44 Mol-% der Struktureinheit **B** der Formel (I) umfasst, jeweils bezogen auf die Gesamtmolmenge der Struktureinheiten von **A, B** im Polymer **P.**

5. Verwendung gemäss einem der vorhergehenden Ansprüche, **dadurch gekennzeichnet, dass** das hydraulische Bindemittel ausgewählt ist aus der Gruppe bestehend aus Zement; Mischungen aus Zement mit Flugaschen, Silica fume, Schlacke, Hüttensande oder Kalksteinfiller; Gips; und gebrannter Kalk.

6. Verwendung gemäss einem der vorhergehenden Ansprüche, **dadurch gekennzeichnet, dass Z1** zusätzlich mindestens ein Fliessmittel ausgewählt aus der Gruppe bestehend aus Lignosulfonat, Naphthalinsulfonsäure-Formaldehyd-Kondensat, sulfoniertem Melamin-Formaldehyd-Kondensat, Melasse und Gluconat aufweist.

7. Verfahren zur zeitlichen Verlängerung der Fliessfähigkeit von wasserreduzierten wässrigen hydraulisch abbindenden Zusammensetzungen, wobei einer wässrigen hydraulisch abbindenden Zusammensetzungen **Z1** umfassend Wasser und hydraulisches Bindemittel, welche ausser einem 5 - 15 % geringeren Wassergehalt eine identische Zusammensetzung aufweist wie eine wässrige hydraulisch abbindende Referenzzusammensetzungen **Z2, Z1** zusätzlich Polymer **P** zugegeben wird, wobei **Z1** sowie **Z2:**
i.) ein Ausbreitmass nach EN 1015-3, respektive EN 12350-5, unmittelbar nach Einmischung des Wassers von 220 - 180 mm, respektive 450 - 550 mm, aufweisen, und
ii.) einen Unterschied des Ausbreitmasses nach EN 1015-3, respektive EN 12350-5, unmittelbar nach Einmischung des Wassers im Vergleich zum Ausbreitmass nach 90 Minuten von maximal 15 %, respektive maximal 20 %, aufweisen;
und es sich bei dem Polymer **P** um ein Polymer **P** wie in der Verwendung von Anspruch 1 - 6 beschrieben handelt.

## Claims

1. Use of a polymer **P** for prolonging the flowability of water-reduced aqueous hydraulically setting compositions, wherein prolonging the flowability is **characterized in that Z1** and **Z2:**
i.) have a slump, directly after admixture of the water, of 220-180 mm according to EN 1015-3, or 450-550 mm according to EN 12350-5, and
ii.) have a difference in slump directly after admixture of the water, compared to the slump after 90 minutes, of 15% maximum according to EN 1015-3, or 20% maximum according to EN 12350-5;
wherein **Z1** refers to aqueous hydraulically setting compositions containing water and hydraulic binder, having a composition that is identical to aqueous hydraulically setting reference compositions **Z2,** except that **Z1** also contains polymer **P,** and contains 5-15% less water than **Z2,** and wherein polymer **P** includes:
a) m mol-% of at least one acid unit **A** of formula (I) ; 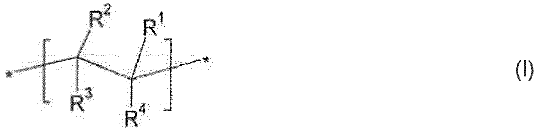 and
b) *n* mol-% of at least one structural unit **B** of formula (II); 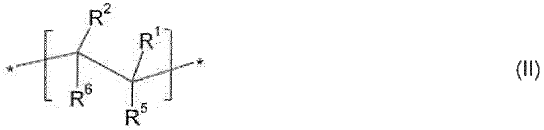
wherein in polymer **P,** R¹ is H or CH₃, and R², R³, and R⁶ stand for H, and R⁴ is COOM;
wherein M stands for H, alkali metal, alkaline earth metal, ammonium, alkylammonium, or mixtures thereof;
wherein R⁵ independently stands for a radical of formula (III)
-R⁷-(R⁸O)_{y}-R⁹ (III)
wherein R⁷ independently stands for -COO- or CONH-;
wherein R⁸ independently stands for a C₂ and/or a C₃ alkylene group,
wherein R⁹ independently stands for H, a C₁-C₁₂ alkyl or cycloalkyl radical, a C₇-C₂₀ alkylaryl or aralkyl radical, or a substituted or unsubstituted aryl radical, or a monofunctional organic radical containing 1 to 30 C atoms and optionally containing heteroatoms;
wherein y independently stands for the value 3-250;
wherein m, *n* independently stand for numbers, wherein the sum *m* + *n* = 100, and *m* > 0, *n* > 0; and wherein the ratio *m*/*n* is between 1.2 and 1.6;
and wherein polymer **P** is obtainable or may be prepared by esterification and amidation of a polycarboxylic acid or an analog thereof, using the polymer-analogous reaction; by reacting
a) at least one polycarboxylic acid or an analog of a polycarboxylic acid; and
b) at least one monohydroxy compound **E** of formula (IV) and at least one monoamine compound **F** of formula (V);
wherein
HO-(R⁸O)_{y}-R^{9'} (IV)
wherein
NH₂-(R⁸O)_{y}-R⁹ (V)
wherein R⁸ independently stands for a C₂ and/or a C₃ alkylene group having any possible sequence of the (R⁸O) units;
wherein R^{9'} stands for a C₁-C₁₂ alkyl or cycloalkyl radical, a C₇-C₂₀ alkylaryl or aralkyl radical, or a substituted or unsubstituted aryl radical, or a monofunctional organic radical containing 1 to 30 C atoms and optionally containing heteroatoms;
wherein R⁹ stands for H, a C₁-C₁₂ alkyl or cycloalkyl radical, a C₇-C₂₀ alkylaryl or aralkyl radical, or a substituted or unsubstituted aryl radical, or a monofunctional organic radical containing 1 to 30 C atoms and optionally containing heteroatoms; and
wherein y independently stands for the values 3-250;
and wherein the monohydroxy compound **E** is a single end-capped polyalkylene glycol having a molecular weight M_{w} of 800-10 000 g/mol.

2. Use according to Claim 1, **characterized in that** the analog of polycarboxylic acid for polymer **P** is selected from the group comprising acid salts, acid halides, and acid anhydrides.

3. Use according to one of the preceding claims, **characterized in that** R⁵ contains at least 30 mol-% (C₂H₄O) units, preferably 50 to 100 mol-% (C₂H₄O) units, more preferably 80 to 100 mol-% (C₂H₄O) units, relative to the total molar quantity of all (R⁸O) units.

4. Use according to one of the preceding claims, wherein polymer **P** contains 30 to 66 mol-%, preferably 50 to 63 mol-%, of acid unit **A,** 20 to 50 mol-%, preferably 34 to 44 mol-%, of structural unit **B** of formula (I), in each case relative to the total molar quantity of structural units **A** and **B** in polymer **P.**

5. Use according to one of the preceding claims, **characterized in that** the hydraulic binder is selected from the group comprising cement; mixtures of cement with fly ash, fumed silica, slag, granulated blast furnace slag, or limestone filler; gypsum; and quicklime.

6. Use according to one of the preceding claims, **characterized in that Z1** additionally contains at least one plasticizing agent selected from the group comprising lignosulfonate, naphthalenesulfonic acid-formaldehyde condensate, sulfonated melamine-formaldehyde condensate, molasses, and gluconate.

7. Method for prolonging the flowability of water-reduced aqueous hydraulically setting compositions, wherein polymer **P** is also added to an aqueous hydraulically setting composition **Z1** containing water and hydraulic binder, which except for a 5-15% lower water content has a composition identical to an aqueous hydraulically setting reference composition **Z2,** wherein **Z1** and **Z2:**
i.) have a slump, directly after admixture of the water, of 220-180 mm according to EN 1015-3, or 450-550 mm according to EN 12350-5, and
ii.) have a difference in slump directly after admixture of the water, compared to the slump after 90 minutes, of 15% maximum according to EN 1015-3, or 20% maximum according to EN 12350-5;
and polymer **P** is a polymer **P** as described in the use according to Claims 1 through 6.

## Revendications

1. Utilisation d'un polymère P pour prolonger dans le temps la fluidité de compositions aqueuses à prise hydraulique à teneur réduite en eau, un prolongement dans le temps de la fluidité se manifestant en ce que Z1 et Z2 présentent :
i.) un étalement selon EN 1015-3, ou respectivement EN 12350-5, directement après l'incorporation de l'eau, de 220 à 180 mm, ou respectivement de 450 à 550 mm, et
ii.) une différence entre l'étalement selon EN 1015-3, ou respectivement EN 12350-5, directement après l'incorporation de l'eau et l'étalement après 90 minutes d'au plus 15 %, ou respectivement d'au plus 20 % ;
Z1 étant une composition aqueuse à prise hydraulique comprenant de l'eau et un liant hydraulique qui présente une composition identique à une composition aqueuse à prise hydraulique de référence Z2, avec comme différence que Z1 contient en outre un polymère P et 5 à 15 % d'eau de moins que Z2, le polymère P étant constitué par :
a) *m* % en moles d'au moins une unité acide A de formule (I) ; et 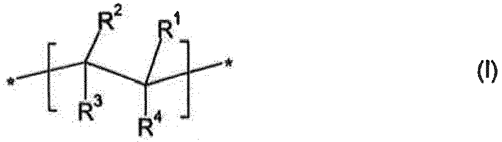
b) *n* % en moles d'au moins une unité structurale B de formule (II) ; 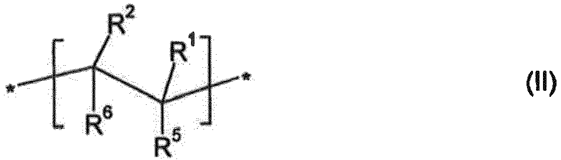
dans le polymère P, R¹ représentant H ou CH₃, et R², R³, R⁶ représentant H, et R⁴ représentant COOM ;
M représentant H, un métal alcalin, un métal alcalino-terreux, l'ammonium, un alkylammonium ou leurs mélanges ;
les R⁵ représentant indépendamment les uns des autres un radical de formule (III)
-R⁷-(R⁸O)_{y}-R⁹ (III)
les R⁷ représentant chacun indépendamment les uns des autres -COO- ou CONH- ;
les R⁸ représentant chacun indépendamment les uns des autres un groupe alkylène en C₂ et/ou en C₃,
les R⁹ représentant chacun indépendamment les uns des autres H, un radical alkyle ou cycloalkyle en C₁-C₁₂, un radical alkylaryle ou aralkyle en C₇-C₂₀, ou un radical aryle substitué ou non substitué, ou un radical organique monovalent de 1 à 30 atomes C, qui comprend éventuellement des hétéroatomes ;
les y représentant indépendamment les uns des autres la valeur 3 à 250 ;
*m, n* signifiant indépendamment l'un de l'autre des nombres, avec la somme *m*+*n* = 100, et *m* > 0, *n* > 0 ; et le rapport *m*/*n* étant compris entre 1,2 et 1,6 ;
et le polymère P pouvant être obtenu par ou étant fabriqué par une réaction polymère-analogue d'estérification et d'amidation d'un acide polycarboxylique ou d'un analogue de celui-ci ; par mise en réaction de
a) au moins un acide polycarboxylique ou un analogue d'un acide polycarboxylique ; et
b) au moins un composé monohydroxy E de formule (IV) et au moins un composé de monoamine F de formule (V) ;
HO-(R⁸O)_{y}-R^{9'} (IV)
NH₂-(R⁸O)_{y}-R⁹ (V)
les R⁸ signifiant chacun indépendamment les uns des autres un groupe alkylène en C₂ et/ou C₃, avec une succession des unités (R⁸O) selon toute séquence possible ;
R^{9'} représentant un radical alkyle ou cycloalkyle en C₁-C₁₂, un radical alkylaryle ou aralkyle en C₇-C₂₀ ou un radical aryle substitué ou non substitué, ou un radical organique monovalent de 1 à 30 atomes C, qui comprend éventuellement des hétéroatomes ;
R⁹ représentant H, un radical alkyle ou cycloalkyle en C₁-C₁₂, un radical alkylaryle ou aralkyle en C₇-C₂₀ ou un radical aryle substitué ou non substitué, ou un radical organique monovalent de 1 à 30 atomes C, qui comprend éventuellement des hétéroatomes ; et
les y représentant chacun indépendamment les uns des autres des valeurs 3 à 250 ;
et le composé monohydroxy E étant un polyalkylène glycol fermé par des groupes terminaux d'un côté ayant un poids moléculaire M_{w} de 800 à 10 000 g/mol.

2. Utilisation selon la revendication 1, **caractérisée en ce que** l'analogue de l'acide polycarboxylique du polymère P est choisi dans le groupe constitué par les sels d'acides, les halogénures d'acides et les anhydrides d'acides.

3. Utilisation selon l'une quelconque des revendications précédentes, **caractérisée en ce que** R⁵ comprend au moins 30 % en moles d'unités (C₂H₄O), de préférence 50 à 100 % en moles d'unités (C₂H₄O), de manière encore davantage préférée 80 à 100 % en moles d'unités (C₂H₄O), par rapport à la quantité totale en moles de toutes les unités (R⁸O).

4. Utilisation selon l'une quelconque des revendications précédentes, dans laquelle le polymère P comprend 30 à 66 % en moles, de préférence 50 à 63 % en moles de l'unité acide A, 20 à 50 % en moles, de préférence 34 à 44 % en moles de l'unité structurale B de formule (I), à chaque fois par rapport à la quantité totale en moles des unités structurales A, B dans le polymère P.

5. Utilisation selon l'une quelconque des revendications précédentes, **caractérisée en ce que** le liant hydraulique est choisi dans le groupe constitué par le ciment ; les mélanges de ciment avec des cendres volantes, de la fumée de silice, des scories, du laitier granulé ou des charges de pierre calcaire ; le gypse ; et la chaux calcinée.

6. Utilisation selon l'une quelconque des revendications précédentes, **caractérisée en ce que** Z1 comprend en outre au moins un agent d'écoulement choisi dans le groupe constitué par le lignosulfonate, le condensat d'acide naphtalinesulfonique-formaldéhyde, le condensat de mélamine-formaldéhyde sulfoné, la mélasse et le gluconate.

7. Procédé de prolongement dans le temps de la fluidité de compositions aqueuses à prise hydraulique à teneur en eau réduite, selon lequel un polymère P est en outre ajouté à une composition aqueuse à prise hydraulique Z1 comprenant de l'eau et un liant hydraulique, qui à l'exception d'une teneur en eau réduite de 5 à 15 % présente une composition identique à une composition aqueuse à prise hydraulique de référence Z2, Z1 et Z2 présentant :
i.) un étalement selon EN 1015-3, ou respectivement EN 12350-5, directement après l'incorporation de l'eau, de 220 à 180 mm, ou respectivement de 450 à 550 mm, et
ii.) une différence entre l'étalement selon EN 1015-3, ou respectivement EN 12350-5, directement après l'incorporation de l'eau et l'étalement après 90 minutes d'au plus 15 %, ou respectivement d'au plus 20 % ;
et le polymère P étant un polymère P tel que décrit dans l'utilisation selon les revendications 1 à 6.
